**Europäisches Patentamt**

**European Patent Office**

**Office européen des brevets**

(19)

(11) Publication number : **0 366 811 B1**

# EUROPEAN PATENT SPECIFICATION

(12)

(45) Date of publication of patent specification :
07.01.93 Bulletin 93/01

(51) Int. Cl.⁵ : **B23H 7/10**

(21) Application number : **89904243.6**

(22) Date of filing : **11.04.89**

(86) International application number :
**PCT/JP89/00392**

(87) International publication number :
**WO 89/10229 02.11.89 Gazette 89/26**

---

(54) **METHOD AND APPARATUS FOR WIRE RECOVERY.**

---

(30) Priority : **25.04.88 JP 100085/88**

(43) Date of publication of application :
**09.05.90 Bulletin 90/19**

(45) Publication of the grant of the patent :
**07.01.93 Bulletin 93/01**

(84) Designated Contracting States :
**CH DE FR GB IT LI**

(56) References cited :
**JP-A- 5 390 437**
**JP-A- 5 531 783**
**JP-B- 4 947 666**
**JP-U-57 116 316**

(73) Proprietor : **FANUC LTD.**
**3580, Shibokusa Aza-Komanba, Oshino-mura**
**Minamitsuru-gun, Yamanashi 401-05 (JP)**

(72) Inventor : **ASO, Toshiyuki Room 7-208, Fanuc**
**Manshonharimomi**
**3539-1, Shibokusa Oshino-mura**
**Minamitsuru-gun Yamanashi 401-05 (JP)**
Inventor : **HOSODA, Hiroshi Fanuc Dai-3**
**Vira-karamatsu**
**3527-1, Shibokusa Oshino-mura**
**Minamitsuru-gun Yamanashi 401-05 (JP)**

(74) Representative : **Billington, Lawrence Emlyn et al**
**HASELTINE LAKE & CO Hazlitt House 28**
**Southampton Buildings Chancery Lane**
**London WC2A 1AT (GB)**

**EP 0 366 811 B1**

Jouve, 18, rue Saint-Denis, 75001 PARIS

## Description

The present invention relates to a wire recovery method and an apparatus therefor for use in a wire-cut electric discharge machine.

In wire-cut electric discharge machines, a used wire is usually retrieved by using a wire recovery drum.

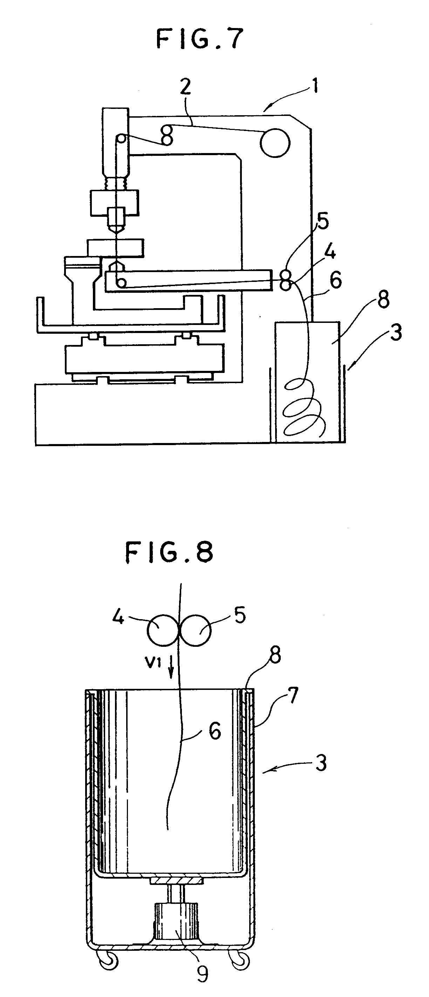

As shown in a typical example of Fig. 7, a wire recovery apparatus 3 is arranged at the lowest-course side of a wire path 2 of a wire-cut electric discharge machine 1, and a used wire 6 held between a feed roller 4 and a pinch roller 5 and drawn out therefrom is simply let fall into a wire recovery drum 8 of the recovery apparatus 3. The wire recovery apparatus 3 of this type is easy to use and has a large capacity, and accordingly it is widely used. However, since the wire 6 sometimes retains the liability to coil up after use and is twisted while it goes through the wire path 2, it is laid randomly and bulkily within the recovery drum 8 if simply let fall into the drum 8, thus extremely reducing the effective wire receiving capacity of the drum 8.

In view of this, an attempt has been made to receive the used wire 6 discharged from the electric discharge machine 1 in a wire recovery drum 8, which is disposed in an outer casing 7 of the wire recovery apparatus 3 while rotating the drum 8 by a motor 9, as shown in Fig. 8. Even with the wire recovery apparatus 3 of this type, it is difficult to neatly receive the wire 6 in the drum 8.

Further attempts have been made in the prior art to optimise the feeding of filamentary material into a rotating drum. Thus, JP-A 55-31783 discloses a method of winding bar material in a real to be wound into a laminated coil. Here the bar material is simply wound around a central core repeatedly to form the coil.

JP-U 57-116316 similarly concerns the winding of a wire rod around a central core, and JP-A 53-90437 relates to the winding of thread in loops into a container.

None of this art has any relevance to winding a used electrode wire neatly in a rotating drum.

An object of the present invention is to provide a wire recovery method and an apparatus therefor, which are capable of receiving a used wire neatly and in quantity, thus permitting a long-term unmanned operation of a wire-cut electric discharge machine.

To achieve the above object, according to one aspect of the present invention, there is provided a method of recovering a used wire in a wire recovery drum while rotating the drum, which comprises the steps of (a) determining a wire coiling radius, (b) calculating an angular velocity of the wire recovery drum that provides a wire coiling speed at the predetermined wire coiling radius coinciding with the wire feed speed, and (c) controlling the acutal angular velocity of the wire recovery drum to the calculated angular velocity.

According to another aspect of the invention, there is provided an apparatus for recovering a used electrode wire in a wire recovery drum while rotating the drum, which comprises a wire recovery drum supported rotatably, a rotating mechanism for rotating the wire recovery drum, setting means for setting a wire coiling radius, calculating means for calculating an angular velocity of the wire recovery drum that provides a wire coiling speed at the preset wire coiling radius coinciding with the wire feed speed, and driving means for driving the rotating mechanism such that an actual angular velocity of the wire recovery drum coincides with the calculated angular velocity.

Thus, according to the present invention, the actual angular velocity of the wire recovery drum is controlled to a desired angular velocity that provides a wire coiling speed coinciding with the wire feed speed at the desired wire coiling radius. Accordingly, the used wire can be stably retrieved at the predetermined radial position in the drum, whereby the wire recovery capacity of the drum can be effectively utilized and unmanned operation of the wire-cut electric discharge machine can be continued for a long term.

Fig. 1 is a schematic longitudinal sectional view of a wire recovery apparatus to which a wire recovery method according to a first embodiment of the present invention is applied;

Fig. 2 is a diagram showing a wire coiling state in which a wire coiling speed is higher than a wire feed speed;

Fig. 3 is a diagram similar to Fig. 2 and showing a state in which a wire coiling speed is lower than the wire feed speed;

Fig. 4 is a diagram similar to Fig. 2 and showing a state in which a wire coiling speed coincides with the wire feed speed;

Fig. 5 is an enlarged perspective view of an annular rail shown in Fig. 1;

Fig. 6 is a flowchart showing a wire recovery method according to a second embodiment of the present invention;

Fig. 7 is a schematic view of a wire-cut electric discharge machine provided with a prior art wire recovery apparatus; and

Fig. 8 is a schematic longitudinal sectional view of a prior art rotating type wire recovery apparatus.

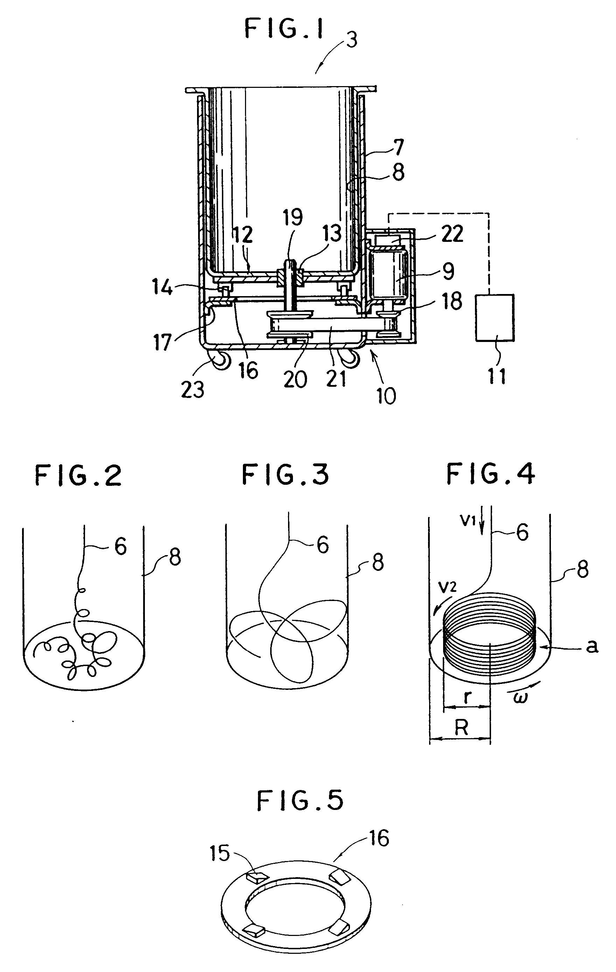

According to the results of experiments conducted by the present inventors, when a wire coiling speed of a wire recovery drum is higher than a wire feed speed of a wire-cut electric discharge machine, a wire 6 is randomly received in a wire recovery drum 8 while forming a spiral as shown in Fig. 2. If, on the other hand, the wire coiling speed is lower than the wire feed speed, then the wire 6 interferes with the inner peripheral surface of the drum 8 and accordingly is randomly received in the drum 8, as shown in Fig. 3.

The present invention is therefore intended to control the wire coiling speed to be coincident with the wire feed speed, thereby to neatly receive a used wire in the wire recovery drum. The principle of recovering a wire employed in this invention will be described with reference to Fig. 4.

In Fig. 4, symbol $\underline{a}$ represents the wire coiling position at which a portion of the wire 6 being newly retrieved in the wire recovery drum 8 contacts the upper surface of a wire portion already contained in the drum (or the bottom surface of the drum 8 at the start), and R represents the inner diameter of the drum 8. Here, a wire coiling speed $v2$ (m/s) of the drum 8 is given by the following equation (1):

$$v2 = r\omega \quad (1)$$

where $\underline{r}$ (m) is the radial distance between the axis of rotation of the drum 8 and the wire coiling position $\underline{a}$, and $\omega$ (rad/s) is the angular velocity of the drum 8.

An angular velocity $\omega$ of the drum required to provide the wire coiling speed $v2$ equal to a wire feed speed $v1$ (m/s) at the radial distance $\underline{r}$ is given by the following equation (2):

$$\omega = v1/r \quad (2)$$

According to the present invention, when recovering a wire, the actual angular velocity of the drum is controlled to the desired angular velocity $\omega$ calculated by equation (2). By doing this, the used wire 6 can be neatly coiled along and near the inner peripheral surface of the wire recovery drum 8, thus effectively using the receiving capacity of the drum 8.

Now, a wire recovery apparatus to which the method according to the first embodiment of the invention is applied will be described with reference to Fig. 1.

In Fig. 1, a wire recovery apparatus 3 is provided with a wire recovery drum 8 which is contained in a cylindrical outer casing 7 having an upper open end and serving as a base. The drum 8 includes a cylindrical peripheral wall, and a bottom wall 12 having a reinforced shaft fitting hole 13 bored through the central portion thereof. A plurality of rubber rollers, e.g., four rubber rollers 14, are disposed at equal angular intervals at a peripheral portion of the bottom surface of the drum 8 coaxially with the same drum, and each have a roller shaft rotatably supported by the bottom wall of the drum.

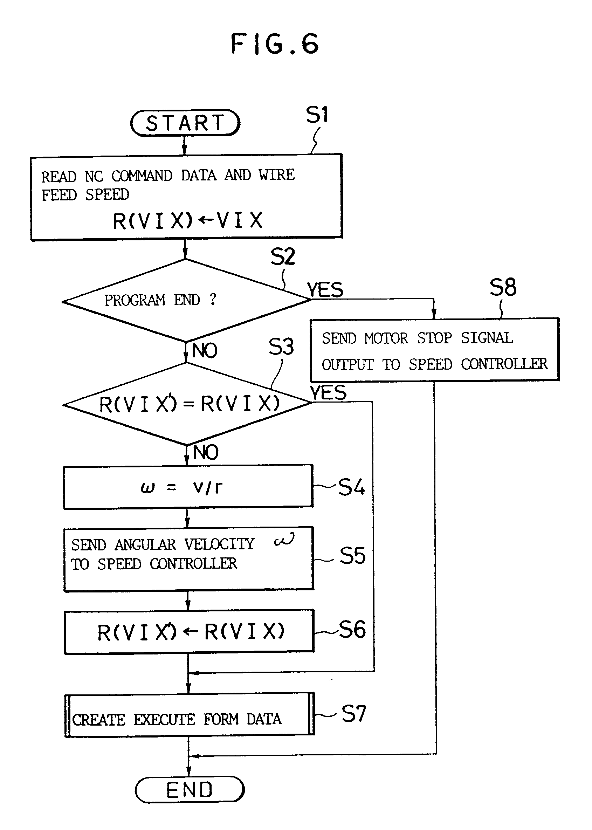

An annular rail 16 (Fig. 5), having wedge-shaped protuberances 15 and aligned with the rollers 14, is secured to the outer casing 7 through a stay 17. The wire recovery drum 8 is placed on this rail 16 through the rollers 14 for rotation relative to the outer casing 7, so that the drum 8 is shaken vertically when the drum runs over the protuberances 15 during rotation.

A rotating mechanism 10, including a motor 9, for rotating the wire recovery drum 8 is so arranged that a driving pulley 18, secured to the output shaft of the motor 9, is operatively coupled through a belt 21 to a driven pulley 20 which is secured to a drive shaft 10 spline-fitted to the shaft fitting hole 13 bored through the drum 8, so as to rotate the wire recovery drum 8 counterclockwise as viewed from above the wire recovery apparatus 3. Connected to the motor 9 is a speed controller 22 for speed control of the rotating mechanism 10, which is arranged to control the motor 9 such that the actual speed of the motor coincides with a command from a setting unit 11. The setting unit 11 comprises a variable resistor, a transformer with a siftable tap, or the like.

The wire recovery apparatus 3 has casters 23, whereby it can be easily moved away from the position for use of the electric discharge machine 1, shown in Fig. 7, to facilitate discarding of the wire.

The wire recovery method according to the first embodiment of the invention, carried out with the above-described wire recovery apparatus 3, will now be described.

Before starting the electric discharge machine 1, an operator determines a desired wire coiling radius $r1$ which corresponds to the radial distance $\underline{r}$ in Fig. 4. If the used wire 6 retrieved in the wire recovery drum 8 interferes with the inner peripheral surface of the drum, the wire is received randomly. Accordingly, the desired radius $r1$ is set to such a value that no interference occurs between the drum 8 and the wire 6, taking account of the liability to coil up, diameter, rigidity, etc. of the wire 6, and is usually set to about 80% of the drum radius R.

Then, the operator calculates a desired reference angular velocity $\omega1$ of the wire recovery drum 8 in accordance with equation $\omega1 = v11/r1$ corresponding to the aforesaid equation (2), such that a wire coiling speed $v21$ (corresponding to $v2$ in Fig. 4) at the desired radius $r1$ coincides with a reference wire feed speed $v11$ of the electric discharge machine 1. After manually adjusting the setting unit 1 such that a command representing the calculated value $\omega1$ is delivered therefrom, the operator starts the operation of the electric discharge machine 1 at the reference wire feed speed $v11$.

During operation of the electric discharge machine 1, electric discharge machining is carried out in a conventionally manner, and the used wire 6 is conveyed toward the wire recovery drum 8. The speed controller 22 drives the motor 9 such that the actual rotational speed of the motor 9 coincides with the command from the setting unit 11, whereby the drum 8 is rotated at the desired reference angular velocity $\omega1$ by the motor 9. The wire is let fall into the drum 8 in alignment with the axis of rotation of the same (shaft 19), and when it contacts the inner bottom surface of the drum, a centrifugal force acts on the wire due to the rotating drum 8, whereby the wire is coiled at the radial distance $r1$ corresponding to the angular velocity $\omega1$ (Fig. 4). Since the wire coiling speed $v21$ coincides with the reference wire feed speed $v11$, the wire 6 is regularly coiled along a circle with a radius equal to the desired radius r1, as shown in Fig. 4. After the drum 8 completes one rotation, the wire is stacked on the wire already coiled up, and thus the wire receiving capacity of the drum 8 can be effectively achieved.

Meanwhile, the drum 8 placed on the rail 16 through the rollers 14 is smoothly rotated within the outer casing 7 and is vertically shaken as it passes the protuberances 15 of the rail 16. Accordingly, the wire 6 can be easily shaken down if it touches the inner peripheral surface of the drum 8 due to its liability to coil up, for example, and therefore, disorderly wire recovering as shown in Figs. 2 and 3 can be avoided.

When the operation of the electric discharge machine 1 is started at a wire feed speed v11x different from the reference wire feed speed v11 or the wire feed speed is changed from the value v11 to the value v11x during operation, the operator calculates a desired angular velocity $\omega x$ of the drum that provides a wire coiling speed coinciding with the wire feed speed v11x at the aforesaid desired radius r1, on the basis of the value v11x and the desired radius r1 and in accordance with equation $\omega x = v11x/r1$ corresponding to the aforesaid equation (2). Then, after manually adjusting the setting unit 11 such that a command representing the calculated value $\omega x$ is delivered therefrom, the operator starts the operation of the electric discharge machine 1 at the wire feed speed v11x. In this case, since the wire coiling speed and the wire feed speed v11x coincide with each other, the wire 6 is recovered while it is regularly coiled in a circle with a radius equal to the desired radius r1.

When the drum 8 is filled with the retrieved wire, it is detached from the electric discharge machine 1 and extracted from the outer casing 7, and the retrieved wire 6 is discarded.

Next, a wire recovery method according to a second embodiment of the invention will be described with reference to Fig. 6.

Although not shown, a wire recovery apparatus for carrying out the method of this embodiment is constructed similar to that shown in Fig. 1 but includes a numerical control apparatus instead of the setting unit 11 in Fig. 1. The numerical control apparatus (hereinafter designated with numeral 11 for the sake of convenience) has an arrangement fundamentally similar to a conventional one. Namely, the numerical control apparatus 11 comprises, though not shown, a central processing unit (hereinafter referred to as CPU) including various registers as described later, and a manual data input device, and is so arranged as to periodically carry out, as a task process, a pulse distribution conventionally known and an execute form data preparation as a pre-processing for the pulse distribution, to control the operation of various operating parts of the electric discharge machine 1, e.g., a wire conveying mechanism. In the execute form data preparation, NC command data is converted into machine language data that is easy to be processed in the numerical control apparatus 11. Further, the numerical control apparatus 11 has an override function so that the wire feed speed specified in a machining program may be changed by an operation of an override switch by the operator.

To recover a wire, the operator first operates the manual data input device to input the desired wire coiling radius r, etc. to the numerical control apparatus 11. Upon input of the data, the CPU of the apparatus 11 stores the input data in corresponding registers.

When the operation of the electric discharge machine is started, the CPU reads out the NC command data of the first one block from the machining program and the command wire feed speed (hereinafter referred to as wire speed) v1x and stores the value v1x in a register R(v1x) (Step S1), and then determines whether the NC command data indicates the end of the program (Step S2). The command data of the first block does not indicate the program end, and accordingly, the result of the determination in Step S2 is negative. The CPU then determines whether the wire speed has been changed, by a comparison between a previous wire speed v1x' (initial value: "0") and a current wire speed v1x respectively stored in registers R(v1x') and R(v1x) (Step S3). In this case, the previous wire speed v1x' is "0" and the current wire speed v1x is not "0." Accordingly, it is determined that the wire speed has been changed, and Step 54 is entered.

The CPU calculates a desired angular velocity $\omega x$ of the drum that provides a wire coiling speed at the desired radius r1 coinciding with the wire feed speed v1x, on the basis of the current wire speed v1x stored in the register R(v1x) and the desired radius r initially set in a register R(r) and in accordance with equation $\omega x = v1x/r1$ which corresponds to the aforesaid equation (2) (Step S4), and sends a command representing the calculated value $\omega x$ to the speed controller 22 (Step S5). Then, the CPU causes the register R(v1x') to store the current wire speed, stored in the register R(v1x), as the previous wire speed (Step S6).

Next, the CPU creates execute form data on the basis of the NC command data read In Step S1 (Step S7). Further, the CPU carries out pulse distribution for the individual axes of the electric discharge machine in accordance with the execute form data, and drives the wire recovery apparatus 3. Accordingly, the electric discharge machine 1 starts electric discharge machining, and, as in the case of the first embodiment, the drum 8 Is rotated at the desired angular velocity $\omega x$ by the motor 9 which is driven by the controller 22 such that the actual rotational speed thereof coincides with the command from the numerical control apparatus 11, thereby starting coiling of the wire in a circle with a radius equal to the desired radius r1.

Thereafter, the process beginning from Step S1 is periodically repeated. While the command wire feed speed remains unchanged, Steps S1, S2, S3 and S7 are executed, whereby the wire 6 is received in such a manner that it is stacked on the wire having received in the drum 8.

During the wire recovery, if it is determined at Step S3 that the command wire feed speed has been changed, a desired angular velocity ωx of the drum is calculated in Step S4 in accordance with the aforesaid equation and on the basis of the changed wire speed v1x stored in the register R(v1x) in Step S1 and the desired wire coiling radius r1 set in the register R(r). Then, as mentioned above, the process of Fig. 6 is repeatedly executed. Consequently, the wire is coiled in a circle with the same radius as before even if the wire speed is changed, and no irregularity occurs in the coiling of the wire. Thus, even if the wire feed speed commanded by the machining program is changed, the angular velocity of the drum is so changed as to continue the coiling operation in the same manner as before, whereby unmanned operation of the electric discharge machine 1 can be continued for a long term without a hitch. The command wire feed speed can be manually changed by the override switch.

Thereafter, when it is determined In Step S2 that the NC command data read in Step S1 indicates the end of the machining program, the CPU sends a stop command to the speed controller 22 to stop the rotation of the motor 9 and thus end the wire recovery operation (Step S8).

In the first and second embodiments described above, the speed controller 22 which responds to a command from the setting unit or the numerical control apparatus is used to electrically control the angular velocity of the drum, but an infinitely variable gear, for example, may alternatively be provided in the rotating mechanism 10 to mechanically control the angular velocity of the drum.

## Claims

1. A method of recovering a used wire (6) from a wire-cut electric discharge machine (1) in a wire recovery drum (8) while rotating the wire recovery drum (8), the method comprising the steps of:
   (a) determining a wire coiling radius (r) in the drum (8);
   (b) calculating an angular velocity (ω) of the wire recovery drum (8) that provides a wire coiling speed (v2) at said predetermined wire coiling radius (r) coinciding with the wire feed speed (v1); and
   (c) controlling the actual angular velocity of said wire recovery drum (8) to said calculated angular velocity (ω).

2. The method according to claim 1, wherein said wire coiling radius (r) is set to such a value that no interference occurs between the wire (6) and the wire recovery drum (8).

3. The method according to claim 1 or 2, wherein, when said wire feed speed (v1) is changed, said angular velocity (ω) of the wire recovery drum (8) is calculated in accordance with the changed wire feed speed (v1) in said step (b).

4. An apparatus (3) for use with a wire-cut electric discharge machine (1) for recovering a used electrode wire (6) in a wire recovery drum (8) while rotating the wire recovery drum (8), comprising:
   a wire recovery drum (8) supported rotatably;
   a rotating mechanism (10) for rotating said wire recovery drum (8);
   setting means for setting a wire coiling radius (r);
   calculating means (11) operable to calculate an angular velocity (ω) of the wire recovery drum (8) that provides a wire coiling speed (v2) at said preset wire coiling radius (r) coinciding with the wire feed speed (v1); and
   driving means (9) for driving said rotating mechanism (10) such that an actual angular velocity of the wire recovery drum (8) coincides with said calculated angular velocity (ω).

5. The apparatus according to claim 4, wherein said calculating means (11) is operable such that when said wire feed speed (v1) is changed, said calculating means (11) operates to calculate said angular velocity (ω) of the wire recovery drum (8) in accordance with the changed wire feed speed (v1).

## Patentansprüche

1. Verfahren zum Wiedergewinnen eines gebrauchten Drahts (6) von einer elektrischen Entladungs-Drahtschneidemaschine (1) in einer Drahtwiedergewinnungs-Trommel (8), während die Drahtwiedergewinnungs-Trommel (8) gedreht wird, welches Verfahren Schritte umfaßt zum
   (a) Bestimmen eines Drahtwendelradius (r) in der Trommel (8),
   (b) Berechnen einer Winkelgeschwindigkeit (ω) der Drahtwiedergewinnungs-Trommel (8), die eine Drahtwendelgeschwindigkeit (v2) bei dem vorbestimmten Drahtwendelradius (r) erzeugt, welche mit der Drahtzuführungsgeschwindigkeit (v1) zusammenfällt, und
   (c) Regeln der Ist-Winkelgeschwindigkeit der Drahtwiedergewinnungs-Trommel (8) hin zu der berechneten Winkelgeschwindigkeit (ω).

2. Verfahren nach Anspruch 1, bei dem der Drahtwendelradius (r) auf einen solchen Wert gesetzt wird, daß keine Störung im Zusammenwirken zwischen dem Draht (6) und der Drahtwiedergewinnungs-Trommel (8) auftritt.

3. Verfahren nach Anspruch 1 oder 2, bei dem wenn die Drahtzuführungsgeschwindigkeit (v1) geändert ist, die Winkelgeschwindigkeit (ω) der Drahtwiedergewinnungs-Trommel (8) in Überein-stimmung mit der geänderten Drahtzuführungs-geschwindigkeit (v1) in Schritt (b) berechnet wird.

4. Vorrichtung (3) zur Benutzung mit einer elektrischen Entladungs-Drahtschneidemaschine (1) zum Wiedergewinnen eines gebrauchten Elektroden-Drahts (6) in einer Drahtwiedergewinnungs-Trommel (8), während die Drahtwiedergewinnungs-Trommel (8) gedreht wird, mit

   einer Drahtwiedergewinnungs-Trommel (8), die drehbar gelagert ist,

   einem Drehmechanismus (10) zum Drehen der Drahtwiedergewinnungs-Trommel (8),

   einem Einstellmittel zum Einstellen eines Drahtwendelradius (r),

   einem Berechnungsmittel (11), das betreibbar ist, um eine Winkelgeschwindigkeit (ω) der Drahtwiedergewinnungs-Trommel (8) zu berechnen, die eine Drahtwendelgeschwindigkeit (v2) bei dem voreingestellten Drahtwendelradius (r), die mit der Drahtzuführungsgeschwindigkeit (v1) zusammenfällt, erzeugt, und

   einem Antriebsmittel (9) zum Treiben des Drehmechanismus (10) derart, daß eine Ist-Winkelgeschwindigkeit der Drahtwiedergewinnungs-Trommel (8) mit der berechneten Winkelgeschwindigkeit (ω) zusammenfällt.

5. Vorrichtung nach Anspruch 4, bei der das Berechnungsmittel (11) derart betreibbar ist, daß wenn die Drahtzuführungsgeschwindigkeit (v1) geändert ist, das Berechnungsmittel (11) arbeitet, um die Winkelgeschwindigkeit (ω) der Drahtwiedergewinnungs-Trommel (8) in Überein-stimmung mit der geänderten Drahtzuführungs-geschwindigkeit (v1) zu berechnen.

**Revendications**

1. Procédé de récupération de fil usagé (6) d'une machine (1) d'usinage par étincelage à coupe par fil dans un tambour (8) de récupération de fil tout en faisant tourner le tambour (8) de récupération de fil, ce procédé comportant les étapes consistant à:

   (a) déterminer un rayon (r) de bobinage de fil dans le tambour (8);

   (b) calculer une vitesse angulaire (ω) du tambour (8) de récupération de fil qui fournisse une vitesse de bobinage de fil (v2) coïncidant avec la vitesse d'alimentation en fil (v1) au rayon (r) prédéterminé de bobinage de fil; et

   (c) commander la vitesse angulaire effective du tambour (8) de récupération de fil pour qu'elle soit égale à la vitesse angulaire (ω) calculée.

2. Procédé selon la revendication 1, dans lequel le rayon (r) de bobinage de fil est fixé à une valeur telle qu'il ne se produise aucune interférence entre le fil (6) et le tambour (8) de récupération de fil.

3. Procédé selon la revendication 1 ou 2, dans lequel lorsque la vitesse d'alimentation en fil (v1) change la vitesse angulaire (ω) du tambour (8) de récupération de fil est calculée selon l'étape de procédé (b) en conformité avec la vitesse modifiée d'alimentation en fil (v1).

4. Dispositif (3) pour l'utilisation avec une machine (1) d'usinage par étincelage à coupe par fil en vue de récupérer un fil d'électrode usagé (6) dans un tambour (8) de récupération de fil tout en faisant tourner le tambour (8) de récupération de fil, comportant:

   un tambour (8) de récupération de fil supporté à rotation;

   un mécanisme de rotation (10) pour mettre en rotation le tambour (8) de récupération de fil;

   des moyens de fixation de valeur pour fixer une valeur de rayon (r) de bobinage de fil;

   des moyens de calcul (11) qui peuvent être mis en oeuvre pour calculer une vitesse angulaire (ω) du tambour (8) de récupération de fil qui fournisse une vitesse de bobinage de fil (v2) coïncidant avec la vitesse d'alimentation en fil (v1) au rayon (r) prédéterminé de bobinage de fil; et

   des moyens d'entraînement (9) pour entraîner le mécanisme de rotation (10) de telle façon que la vitesse angulaire effective du tambour (8) de récupération de fil soit égale à la vitesse angulaire (ω) calculée.

5. Dispositif selon la revendication 4, dans lequel les moyens de calcul (11) peuvent être mis en oeuvre de telle façon que lorsque la vitesse d'alimentation en fil (v1) change les moyens de calcul (11) sont mis en oeuvre pour calculer la vitesse angulaire (ω) du tambour (8) de récupération de fil en conformité avec la vitesse modifiée d'ali-mentation en fil (v1).

# FIG.1

# FIG.2

# FIG.3

# FIG.4

# FIG.5

# FIG.6

```
                    ( START )              S1

        ┌──────────────────────────────────┐
        │ READ NC COMMAND DATA AND WIRE     │
        │ FEED SPEED                        │
        │        R(VIX) ← VIX               │
        └──────────────────────────────────┘
                         │
                         ▼              S2            S8
                    ╱─────────╲    YES                │
                   ╱           ╲─────────────┐   ┌──────────────────────────┐
                  ╱ PROGRAM END ?╲           │   │ SEND MOTOR STOP SIGNAL   │
                   ╲            ╱             └──▶│ OUTPUT TO SPEED CONTROLLER│
                    ╲─────────╱                  └──────────────────────────┘
                      │ NO        S3                       │
                      ▼      ╱─────────╲  YES              │
                    ╱─────────╲────────────┐               │
                   ╱R(VIX')=R(VIX)╲        │               │
                    ╲           ╱          │               │
                     ╲─────────╱           │               │
                       │ NO                │               │
        ┌──────────────────────────┐       │               │
        │       ω = v/r            │─ S4   │               │
        └──────────────────────────┘       │               │
                      │                     │               │
        ┌──────────────────────────┐       │               │
        │ SEND ANGULAR VELOCITY  ω │─ S5   │               │
        │ TO SPEED CONTROLLER      │       │               │
        └──────────────────────────┘       │               │
                      │                     │               │
        ┌──────────────────────────┐       │               │
        │    R(VIX') ← R(VIX)      │─ S6   │               │
        └──────────────────────────┘       │               │
                      │◀───────────────────┘               │
        ┌──────────────────────────┐                       │
        │ CREATE EXECUTE FORM DATA │─ S7                    │
        └──────────────────────────┘                       │
                      │◀──────────────────────────────────┘
                    ( END )
```

# FIG.7

# FIG.8